# EUROPEAN PATENT SPECIFICATION

(11) **EP 3 825 142 B1**
(45) Date of publication and mention of the grant of the patent: **26.10.2022**
(21) Application number: 20208842.3
(22) Date of filing: 20.11.2020
(51) Int. Cl.: B60B 1/04

(54) **SPOKED WHEEL STRUCTURE**
SPEICHENRADSTRUKTUR
STRUCTURE DE ROUE À RAYONS

(30) Priority: 22.11.2019 IT 201900021957
(43) Date of publication of application: 26.05.2021
(73) Proprietor: Ruotemilano S.r.l., 20139 Milano (IT)
(72) Inventor: ALBERIO, Fabio, I-20139 MILANO (IT)
(74) Representative: Leihkauf, Steffen Falk

(56) References cited:
- EP-A2- 1 619 043
- DE-U1-202005 016 288
- FR-A1- 2 813 558
- US-A1- 2002 060 494
- US-A1- 2007 063 575

## Description

### Field of the invention

The present invention relates to a spoked wheel structure.

### Background art

The use of spoked wheels, which convey particular prestige to vehicles, is known in the automotive field, particularly in the luxury car field. Document EP 1 619 043 A2 describes an example belonging to the state of the art.

Such wheels comprise a wheel rim, a wheel hub central with respect to the rim, and a plurality of spokes, which connect and hold the wheel rim and hub mutually in place.

The rim externally forms a rim channel which is configured to be coupled to a tire.

In a type of spoked wheels, known as "tubeless", the channel and tire form a sealed chamber with each other.

In another type of spoked wheel, a toroidal tubular rubber element is present between the channel and the tire, separated therefrom, forming an airtight inner tube.

The opposite ends of the spokes are engaged in corresponding seats in the wheel rim and the wheel hub, respectively.

During the assembly of the wheel structure, the spokes are tightened, or pretensioned, along the axis thereof to ensure the required rigidity of the structure.

In order to prevent the spoke from unscrewing or loosening during travel, the spokes are tightened between hub and rim with a very high tightening torque, generally of about 30 Nm.

This generates a very high pretensioning along the axis of the spoke, which can reach several tons.

The very high pretensioning value, which is indispensable for known spoke wheels, implies the disadvantage of causing high risks concerning the safety of use of the vehicle.

For example, a bumpy road surface when cornering. The impulsive and non-impulsive stresses which are applied to the spokes add to the already high pretensioning. The risk of breakage of the spokes is therefore very real.

In order to avoid such a high pretensioning of the spokes, it is not possible to lock the spoke to prevent an undesired rotation thereof using thread-locking or self-locking paste in the coupling threads between spoke and hub because, especially in sports applications, the wheel brakes heat the hub even up to 300°C. This high temperature would damage the thread-locking paste, or in any case, would reduce the locking capacity thereof.

Therefore, the need is felt to provide a spoked wheel which avoids the need to pretension the spokes at a high pretensioning value so as to prevent them from unscrewing, thus ensuring the locking of the spokes even if at a pretensioning value which is significantly and substantially lower than that required by the prior art.

Furthermore, the need is felt to prevent the projection at a very high speed of fragments of the spoke in case of crash breakage thereof.

Indeed, the very high pretensioning of the spokes of the known wheels, in case of crash breakage thereof, imparts enormous kinetic energy to the fragments, causing them to be projected as real projectiles according to uncontrollable trajectories capable of piercing obstacles or people.

Therefore, the need is also felt to provide a spoked wheel structure capable of retaining any fragments of the spoke in case of breakage thereof.

### Summary of the invention

It is the object of the present invention to devise and provide a spoked wheel structure which allows to meet the aforesaid needs and to at least partially overcome the drawbacks described above with reference to the prior art.

In particular, it is an object of the present invention to provide a spoked wheel structure which ensures a high level of safety of use against the risk of spokes loosening and breaking.

Furthermore, it is an object of the present invention to provide a spoked wheel structure which prevents the spokes from unscrewing or loosening while avoiding the need to pretension the spokes at a very high pretensioning value.

It is thus an object of the present invention to provide a spoked wheel structure which ensures a high resistance against unscrewing or loosening of the spokes, by means of a substantially lower spoke tightening torque than that required by the prior art.

It is another object of the present invention to provide a spoked wheel structure which ensures adequate safety even in case of breakage of some spokes.

It is another object of the present invention to provide a spoked wheel structure which allows to retain any fragments of spokes in case of breakage thereof.

These and further objects and advantages are achieved by a spoked wheel structure according to independent claim 1.

Further objects, solutions, and advantages are present in the embodiments described below and claimed in the dependent claims.

The spoked wheel structure according to the present invention allows to ensure the locking of the spokes while avoiding pretensioning them at high tightening torque, by virtue of the presence of the safety elements which are applied in the respective spoke seats in the rim, and press against the enlarged head of the spoke on the opposite side of the retaining surface against which the enlarged head itself is abuttingly arranged.

These safety elements, in other words, press the enlarged head against the retaining surface, thus increasing the friction against the rotation of the head against the retaining surface. In other words, the locking of the spoke is achieved not by pulling the head against the retaining surface of the seat but, on the contrary, by pushing the safety element against the enlarged head, on the opposite side with respect to the stem of the spoke.

Furthermore, the presence of the safety element allows to retain the spoke in its seat in the rim even in case of breakage thereof, thus avoiding it from projecting at high speed.

Therefore, the presence of the safety elements ensures a high level of safety in the use of the spoked wheel structure according to the invention.

### Brief description of the drawings

The invention will be disclosed below by describing some embodiments thereof by way of non-limiting example, with reference to the accompanying drawings, in which:

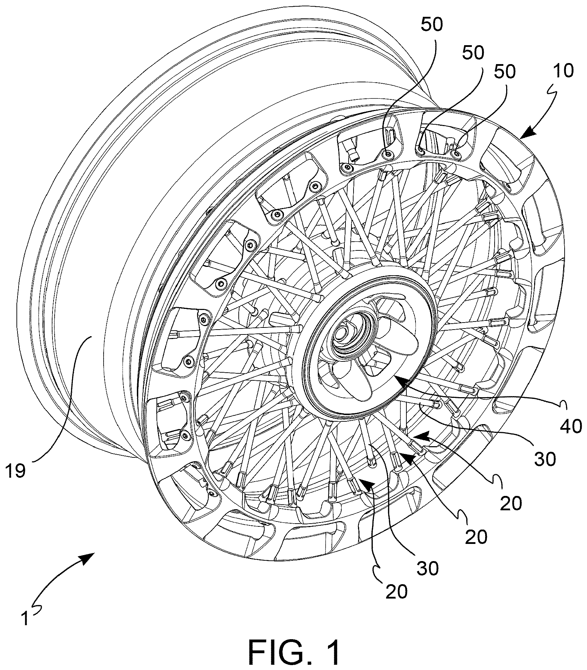

- figure 1 shows an angled isometric view of a spoked wheel structure according to the invention;

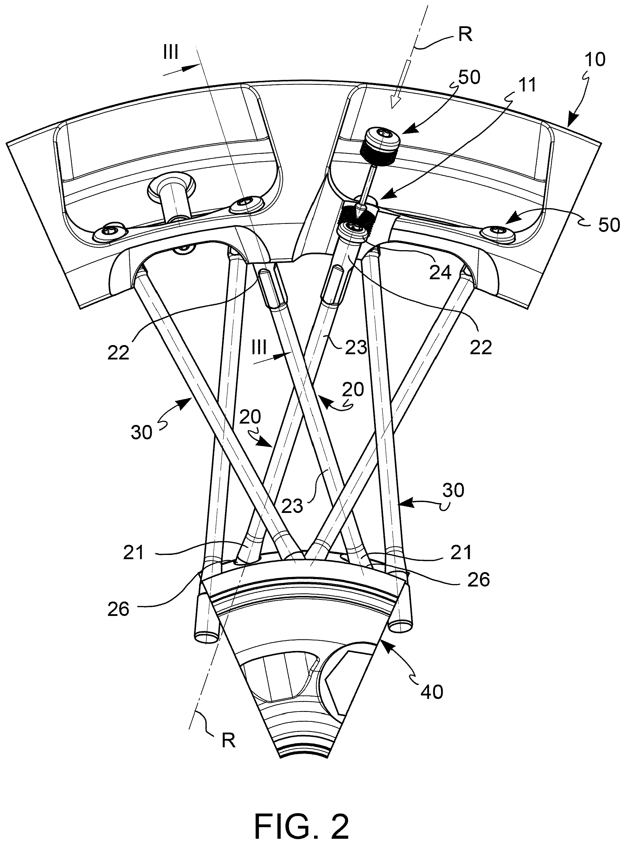

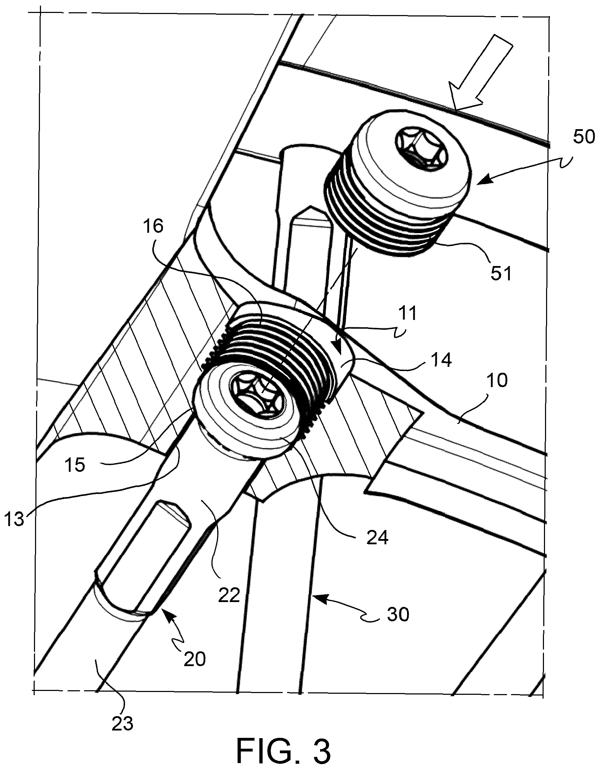

- figure 2 shows a partial front view of the wheel structure in figure 1, in which a safety element is shown before it is mounted separately from the seat, and in which an area of wheel rim material close to the corresponding spoke seat has been removed for ease of presentation and indicated by a dotted surface;
- figure shows an enlarged detail of figure 2 close to the aforesaid safety element;

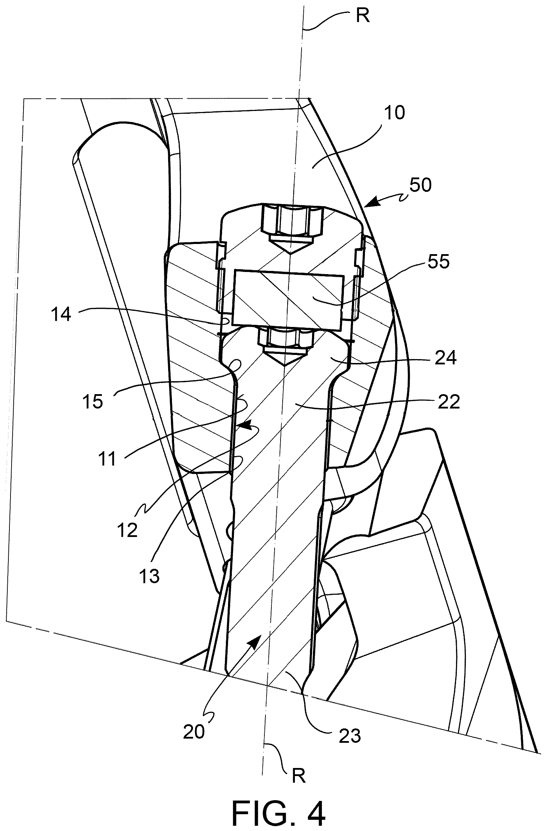

- figure 4 shows a section view of the wheel structure in figure 1, taken along a section plane passing through the axis of a spoke;

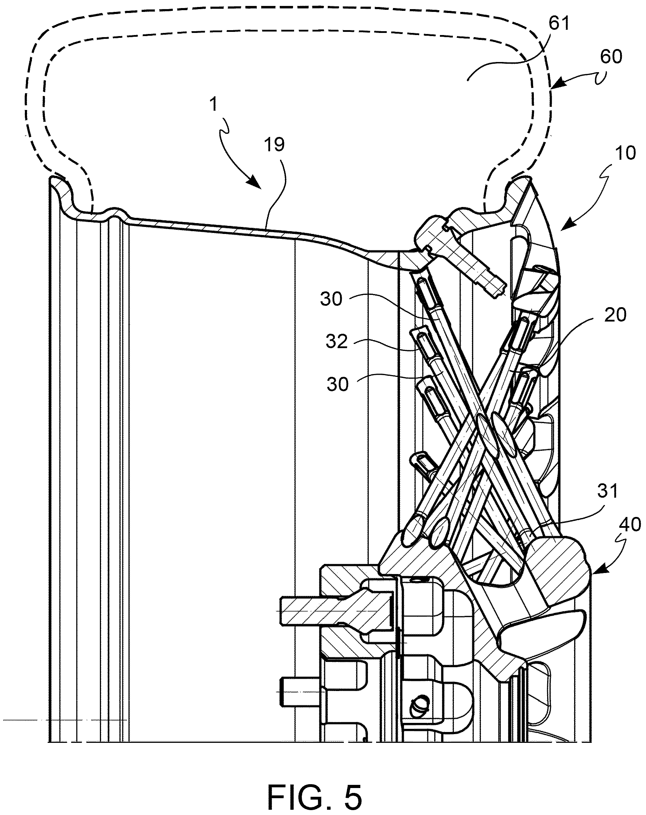

- figure 5 shows a section view of the wheel structure in figure 1, taken along a section plane passing through the rotation axis of the wheel, in which a tire is shown by a dashed line.

### Description of the preferred embodiments

With reference to the figures, a spoked wheel structure according to the invention is indicated by reference numeral 1 as a whole.

The spoked wheel structure 1 is adapted to be applied to a vehicle, in particular a car, in particular a luxury or sports car.

The spoked wheel structure 1 comprises a wheel rim 10 comprising a channel 19 for accommodating a tire 60, a wheel hub 40 arranged centrally with respect to said wheel rim 10 adapted to be rotatably mounted with respect to said vehicle, a plurality of wheel spokes 20 mounted interposed and tightened between said wheel hub 40 and said wheel rim 10.

Each wheel spoke 20 of said plurality defines a proximal spoke end 21 configured to be fixed to said hub 40 and an opposite distal spoke end 22 configured to be fixed to said wheel rim 10.

Each wheel spoke 20 of said plurality comprises an elongated spoke stem 23 extending along an axis of spoke R-R between said proximal end of spoke 21 and said distal end of spoke 22, and an enlarged spoke head 24 at said distal end of spoke 22.

Said wheel rim 10 comprises a plurality of spoke engaging seats 11, each of said seats 11 is configured to receive and retain a respective spoke 20 of said plurality of spokes at said distal spoke end 22.

Said each spoke seat 11 comprising a through hole 12 comprises a first hole portion 13 configured to allow the passage of the stem 23 of said respective spoke 20, a second hole portion 14 having a larger diameter than that of the first hole portion 13 and configured to allow the passage of the enlarged spoke head 24, a retaining surface 15 which joins the first hole portion 13 to the second hole portion 14 and configured to abuttingly retain said enlarged head 24 of said respective spoke 20 when said respective spoke 20 is tightened between said wheel rim 10 and said wheel hub 40.

The retaining surface 15 is a substantially transverse surface to the axis of the through hole 12. Preferably, the retaining surface 15 is configured to form an abutment undercut for the enlarged head 24.

According to an embodiment, the shape of the retaining surface is complementary to a lower surface of the enlarged head 24 facing the spoke stem 23.

Thereby, the thrust of the safety element 50, which is described below, against the enlarged head 24 forms a greater locking friction between the enlarged head 24 and the retaining surface 15, or between the lower surface of the enlarged head 24 and the retaining surface 15.

The wheel structure 1 comprises a plurality of safety elements 50, each of said safety elements 50 being engageable in a corresponding seat 11 of said plurality of spoke seats so as to press said enlarged head 24 of said respective spoke 20 against said retaining surface 15 by means of a thrust force exerted along said spoke axis R-R and oriented from said wheel rim 10 towards said wheel hub 40.

According to an embodiment, each of said safety elements 50 is configured to be inserted into said second hole portion 14 up to abut against said enlarged spoke head 24 on the opposite side with respect to said elongated spoke stem 23, by interposing said enlarged spoke head 24 between said retaining surface 15 and said safety element 50.

In other words, the safety elements 50 are configured to push the enlarged head 24 against the retaining surface 14, to prevent the rotation of the enlarged head 24 against the retaining surface 14.

According to an embodiment, each safety element 50 of said plurality comprises a friction pad 55 which is integral with said each safety element 50 and adapted to face said enlarged head 24 and to be pressed in contact against said enlarged head 24, so as to counteract a rotation of said enlarged head 24 with respect to said each safety element 50.

Thereby, the friction pad helps to avoid the unscrewing of the spoke 20, producing static friction against an upper surface of the enlarged head 24, facing away from the spoke stem 23 and/or away from the lower surface of the enlarged head 24.

According to an embodiment, said friction pad 55 comprises an elastomeric material.

According to an embodiment, each of said safety elements 50 of said plurality and each corresponding second hole portion 14 of the spoke seat 11 comprise removable engagement means 51, 16 for removably engaging said each safety element 50 in said second hole portion 14.

According to an embodiment, said removable engagement means 51, 16 comprise an outer thread 51 of said each safety element and a complementary inner thread 16 of said second hole portion 14, configured to approach said each safety element 50 against said enlarged spoke head 24 by screwing said each safety element 50 according to a predetermined screwing rotation direction.

Therefore, according to this embodiment, the safety element comprises an externally threaded body, having a thrust end surface adapted to press against the enlarged head 24, and an opposite actuating end surface adapted to be rotated to screw/unscrew such a safety element into the seat 11.

The thrust end surface may comprise a recess to accommodate part of said friction pad 55, so that said friction pad 55 protrudes at least partially from said thrust end surface.

According to an embodiment, said respective spoke 20 of said plurality comprises tightening means which are capable of tightening said respective spoke 20 by rotating the enlarged spoke head 24 according to a predetermined tightening rotation direction, and where the screwing rotation direction of said each safety element 50 is opposite to the tightening rotation direction of said respective spoke 20.

According to an embodiment, said respective spoke 20 is monolithic, said enlarged head 24 and said elongated stem 23 being made in a single piece, and where said elongated stem 23 has a free end 26 on the opposite side of said enlarged head 24, at said proximal spoke end 21, comprising an outer thread which is complementary to a corresponding inner thread in said rim hub 40.

According to another embodiment, not shown in the figures, the enlarged head 24 of said respective spoke 20 is separated from said spoke stem 23 and coupled to said spoke stem 23 by means of a threaded coupling.

According to an embodiment, each of said safety elements 50 of said plurality and each corresponding second hole portion 14 of the spoke seat 11 comprise non-removable engagement means, preferably selected from interference coupling, press-fitting, bonding.

According to an embodiment, each of said safety elements 50 of said plurality and each corresponding second hole portion 14 of said spoke seat 11 comprise elastic engagement means, preferably selected from Seeger ring, cotter pin.

According to an embodiment, said channel 19 for accommodating a tire is configured to form, together with the tire, a sealed chamber 61 of the tubeless type, and where said plurality of spokes 20 is connected to said wheel rim 1 outside said sealed chamber.

According to an embodiment, the spoked wheel structure 1 further comprises a second plurality of spokes 30 mounted interposed and tightened between said wheel hub 40 and said wheel rim 10, where each spoke 30 of said second plurality defines a proximal spoke end 31 configured to be fixed to said hub 40 and an opposite distal spoke end 32 configured to be fixed to said wheel rim 10, where said second plurality of spokes 30 is connected to said wheel rim 10 inside said sealed chamber 61 at said channel 19, and where said wheel structure 1 is devoid of safety elements at each of said spokes 30 of said second plurality of spokes, and where the distal end 32 of said spokes 30 of said second plurality is tightly sealed with respect to said channel 19.

## Claims

1. A spoked wheel structure (1) for a vehicle, comprising:
- a wheel rim (10) comprising a channel (19) for accommodating a tire;
- a wheel hub (40) arranged centrally with respect to said wheel rim (10) adapted to be rotatably mounted with respect to said vehicle;
- a plurality of wheel spokes (20) mounted interposed and tightened between said wheel hub (40) and said wheel rim (10), wherein each wheel spoke (20) of said plurality defines a proximal spoke end (21) configured to be fixed to said hub (40) and an opposite distal spoke end (22) configured to be fixed to said wheel rim (10), and wherein each wheel spoke (20) of said plurality comprises an elongated spoke stem (23) extending along a spoke axis (R-R) between said proximal spoke end (21) and said distal spoke end (22), and an enlarged spoke head (24) at said distal spoke end (22);
- wherein said wheel rim (10) comprises a plurality of spoke engaging seats (11), each of said seats (11) being configured to receive and retain a respective spoke (20) of said plurality of spokes at said distal spoke end (22), said each spoke seat (11) comprising a through hole (12) comprising a first hole portion (13) configured to allow the passage of the stem (23) of said respective spoke (20), a second hole portion (14) having a larger diameter than that of the first hole portion (13) and configured to allow the passage of the enlarged spoke head (24), a retaining surface (15) which joins the first hole portion (13) to the second hole portion (14) and configured to abuttingly retain said enlarged head (24) of said respective spoke (20) when said respective spoke (20) is tightened between said wheel rim (10) and said wheel hub (40),
- **characterised in that** said wheel structure (1) comprises a plurality of safety elements (50), each of said safety elements (50) being engageable in a corresponding seat (11) of said plurality of spoke seats so as to press said enlarged head (24) of said respective spoke (20) against said retaining surface (15) by means of a thrust force exerted along said spoke axis (R-R) and oriented from said wheel rim (10) towards said wheel hub (40).

2. A spoked wheel structure (1) according to claim 1, wherein each of said safety elements (50) is configured to be inserted into said second hole portion (14) up to abut against said enlarged spoke head (24) on the opposite side with respect to said elongated spoke stem (23), by interposing said enlarged spoke head (24) between said retaining surface (15) and said safety element (50).

3. A spoked wheel structure (1) according to at least one preceding claim, wherein each safety element (50) of said plurality comprises a friction pad (55) which is attached to said each safety element (50) and adapted to face said enlarged head (24) and to be pressed in contact against said enlarged head (24), so as to counteract a rotation of said enlarged head (24) with respect to said each safety element (50).

4. A spoked wheel structure (1) according to claim 3, wherein said friction pad (55) comprises an elastomeric material.

5. A spoked wheel structure (1) according to at least one preceding claim, wherein each of said safety elements (50) of said plurality and each corresponding second hole portion (14) of the spoke seat (11) comprise removable engagement means (51, 16) for removably engaging said each safety element (50) in said second hole portion (14) .

6. A spoked wheel structure (1) according to claim 3, wherein said removable engagement means (51, 16) comprise an outer thread (51) of said each safety element and a complementary inner thread (16) of said second hole portion (14), configured to bring said each safety element (50) against said enlarged spoke head (24) by screwing said each safety element (50) according to a predetermined screwing rotation direction.

7. A spoked wheel structure (1) according to claim 6, wherein said respective spoke (20) of said plurality comprises tightening means which are capable of tightening said respective spoke (20) by rotating the enlarged spoke head (24) according to a predetermined tightening rotation direction, and wherein the screwing rotation direction of said each safety element (50) is opposite to the tightening rotation direction of said respective spoke (20).

8. A spoked wheel structure (1) according to claim 7, wherein said respective spoke (20) is monolithic, said enlarged head (24) and said elongated stem (23) being made in a single piece, and wherein said elongated stem (23) has a free end (26) on the opposite side of said enlarged head (24), at said proximal spoke end (21), comprising an outer thread which is complementary to a corresponding inner thread in said rim hub (40).

9. A spoked wheel structure (1) according to claim 7, wherein the enlarged head (24) of said respective spoke (20) is separated from said spoke stem (23), and coupled to said spoke stem (23) by means of a threaded coupling.

10. A spoked wheel structure (1) according to claim 1 or 2, wherein each of said safety elements (50) of said plurality and each corresponding second hole portion (14) of the spoke seat (11) comprise non-removable engagement means, preferably selected from: interference coupling, press-fitting, bonding.

11. A spoked wheel structure (1) according to claim 1 or 2, wherein each of said safety elements (50) of said plurality and each corresponding second hole portion (14) of said spoke seat (11) comprise elastic engagement means, preferably selected from: Seeger ring, cotter pin.

12. A spoked wheel structure (1) according to at least one preceding claim, wherein said channel (19) for accommodating a tire is configured to form, together with the tire, a sealed chamber (61) of the tubeless type, and wherein said plurality of spokes (20) is connected to said wheel rim (1) outside said sealed chamber.

13. A spoked wheel structure (1) according to claim 12, further comprising a second plurality of spokes (30) mounted interposed and tightened between said wheel hub (40) and said wheel rim (10), wherein each spoke (30) of said second plurality defines a proximal spoke end (31) configured to be fixed to said hub (40) and an opposite distal spoke end (32) configured to be fixed to said wheel rim (10), wherein said second plurality of spokes (30) is connected to said wheel rim (10) inside said sealed chamber (61) at said channel (19), and wherein said wheel structure (1) is devoid of safety elements at each of said spokes (30) of said second plurality of spokes, and wherein the distal end (32) of said spokes (30) of said second plurality is tightly sealed with respect to said channel (19).

## Patentansprüche

1. Speichenradstruktur (1) für ein Fahrzeug, umfassend:
- eine Radfelge (10), welche einen Kanal (19) zum Aufnehmen eines Reifens umfasst;
- eine in Bezug auf die Radfelge (10) zentral angeordnete Radnabe (40), welche dazu eingerichtet ist, in Bezug auf das Fahrzeug drehbar montiert zu sein;
- eine Mehrzahl von Radspeichen (20), welche zwischen der Radnabe (40) und der Radfelge (10) eingefügt und befestigt montiert sind, wobei jede Radspeiche (20) der Mehrzahl ein proximales Speichenende (21), welches dazu eingerichtet ist, an der Nabe (40) fixiert zu sein, und ein entgegengesetztes distales Speichenende (22) definiert, welches dazu eingerichtet ist, an der Radfelge (10) fixiert zu sein, und wobei jede Radspeiche (20) der Mehrzahl einen länglichen Speichenschaft (23), welcher sich entlang einer Speichenachse (R-R) zwischen dem proximalen Speichenende (21) und dem distalen Speichenende (22) erstreckt, und einen vergrößerten Speichenkopf (24) an dem distalen Speichenende (22) umfasst;
- wobei die Radfelge (10) eine Mehrzahl von Speicheneingriffsaufnahmen (11) umfasst, wobei jede der Aufnahmen (11) dazu eingerichtet ist, eine jeweilige Speiche (20) der Mehrzahl von Speichen an dem distalen Speichenende (22) aufzunehmen und zu halten, wobei die jede Speichenaufnahme (11) ein Durchgangsloch (12) umfasst, welches einen ersten Lochabschnitt (13), welcher dazu eingerichtet ist, den Durchgang des Schafts (23) der jeweiligen Speiche (20) zu erlauben, einen zweiten Lochabschnitt (14), welcher einen größeren Durchmesser als der erste Lochabschnitt (13) aufweist und dazu eingerichtet ist, den Durchgang des vergrößerten Speichenkopfs (24) zu erlauben, und eine Haltefläche (15) umfasst, welche den ersten Lochabschnitt (13) mit dem zweiten Lochabschnitt (14) verbindet und dazu eingerichtet ist, den vergrößerten Kopf (24) der jeweiligen Speiche (20) anliegend zu halten, wenn die jeweilige Speiche (20) zwischen der Radfelge (10) und der Radnabe (40) befestigt ist,
- **dadurch gekennzeichnet, dass** die Radstruktur (1) eine Mehrzahl von Sicherheitselementen (50) umfasst, wobei jedes der Sicherheitselemente (50) in einer entsprechenden Aufnahme (11) der Mehrzahl von Speichenaufnahmen in Eingriff bringbar ist, um den vergrößerten Kopf (24) der jeweiligen Speiche (20) mittels einer entlang der Speichenachse (R-R) ausgeübten und von der Radfelge (10) in Richtung der Radnabe (40) orientierten Schubkraft gegen die Haltefläche (15) zu drücken.

2. Speichenradstruktur (1) nach Anspruch 1, wobei jedes der Sicherheitselemente (50) dazu eingerichtet ist, in den zweiten Lochabschnitt (14) eingesetzt zu werden, bis es in Bezug auf den länglichen Speichenschaft (23) an der entgegengesetzten Seite gegen den vergrößerten Speichenkopf (24) anliegt, indem der vergrößerte Speichenkopf (24) zwischen die Haltefläche (15) und das Sicherheitselement (50) eingefügt wird.

3. Speichenradstruktur (1) nach wenigstens einem vorhergehenden Anspruch, wobei jedes Sicherheitselement (50) der Mehrzahl einen Reibblock (55) umfasst, welcher an dem jedem Sicherheitselement (50) angebracht ist und dazu eingerichtet ist, dem vergrößerten Kopf (24) zugewandt zu sein und in Kontakt gegen den vergrößerten Kopf (24) gedrückt zu werden, um einer Drehung des vergrößerten Kopfs (24) in Bezug auf das jede Sicherheitselement (50) entgegenzuwirken.

4. Speichenradstruktur (1) nach Anspruch 3, wobei der Reibblock (55) ein elastomeres Material umfasst.

5. Speichenradstruktur (1) nach wenigstens einem vorhergehenden Anspruch, wobei jedes der Sicherheitselemente (50) der Mehrzahl und jeder entsprechende zweite Lochabschnitt (14) der Speichenaufnahme (11) lösbare Eingriffsmittel (51, 16) zum lösbaren in Eingriff bringen des jeden Sicherheitselements (50) in dem zweiten Lochabschnitt (14) umfassen.

6. Speichenradstruktur (1) nach Anspruch 3, wobei die lösbaren Eingriffsmittel (51, 16) ein Außengewinde (51) des jeden Sicherheitselements und ein komplementäres Innengewinde (16) des zweiten Lochabschnitts (14) umfassen, welche dazu eingerichtet sind, das jede Sicherheitselement (50) gegen den vergrößerten Speichenkopf (24) zu bringen, indem das jede Sicherheitselement (50) gemäß einer vorbestimmten Schraubdrehrichtung geschraubt wird.

7. Speichenradstruktur (1) nach Anspruch 6, wobei die jeweilige Speiche (20) der Mehrzahl Befestigungsmittel umfasst, welche dazu in der Lage sind, die jeweilige Speiche (20) zu befestigen, indem der vergrößerte Speichenkopf (24) gemäß einer vorbestimmten Befestigungsdrehrichtung gedreht wird, und wobei die Schraubdrehrichtung des jeden Sicherheitselements (50) entgegengesetzt zu der Befestigungsdrehrichtung der jeweiligen Speiche (20) ist.

8. Speichenradstruktur (1) nach Anspruch 7, wobei die jeweilige Speiche (20) monolithisch ist, wobei der vergrößerte Kopf (24) und der längliche Schaft (23) in einem einzelnen Stück hergestellt sind und wobei der längliche Schaft (23) an dem proximalen Speichenende (21) an der entgegengesetzten Seite des vergrößerten Kopfs (24) ein freies Ende (26) aufweist, welches ein Außengewinde umfasst, welches komplementär zu einem entsprechenden Innengewinde in der Felgennabe (40) ist.

9. Speichenradstruktur (1) nach Anspruch 7, wobei der vergrößerte Kopf (24) der jeweiligen Speiche (20) von dem Speichenschaft (23) separiert ist und mittels einer Gewindekopplung mit dem Speichenschaft (23) gekoppelt ist.

10. Speichenradstruktur (1) nach Anspruch 1 oder 2, wobei jedes der Sicherheitselemente (50) der Mehrzahl und jeder entsprechende zweite Lochabschnitt (14) der Speichenaufnahme (11) nicht lösbare Eingriffsmittel umfassen, welche vorzugsweise ausgewählt sind aus: Interferenzkopplung, Presspassung, Bonding.

11. Speichenradstruktur (1) nach Anspruch 1 oder 2, wobei jedes der Sicherheitselemente (50) der Mehrzahl und jeder entsprechende zweite Lochabschnitt (14) der Speichenaufnahme (11) elastische Eingriffsmittel umfassen, welche vorzugsweise ausgewählt sind aus: Seeger-Ring, Splint.

12. Speichenradstruktur (1) nach wenigstens einem vorhergehenden Anspruch, wobei der Kanal (19) zum Aufnehmen eines Reifens dazu eingerichtet ist, zusammen mit dem Reifen eine abgedichtete Kammer (61) des schlauchlosen Typs zu bilden, und wobei die Mehrzahl von Speichen (20) außerhalb der abgedichteten Kammer mit der Radfelge (1) verbunden ist.

13. Speichenradstruktur (1) nach Anspruch 12, ferner umfassend eine zweite Mehrzahl von Speichen (30), welche zwischen der Radnabe (40) und der Radfelge (10) eingefügt und befestigt montiert sind, wobei jede Speiche (30) der zweiten Mehrzahl ein proximales Speichenende (31), welches dazu eingerichtet ist, an der Nabe (40) fixiert zu sein, und ein entgegengesetztes distales Speichenende (32) definiert, welches dazu eingerichtet ist, an der Radfelge (10) fixiert zu sein, wobei die zweite Mehrzahl von Speichen (30) innerhalb der abgedichteten Kammer (61) in dem Kanal (19) mit der Radfelge (10) verbunden ist und wobei die Radstruktur (1) an jeder der Speichen (30) der zweiten Mehrzahl von Speichen frei von Sicherheitselementen ist und wobei das distale Ende (32) der Speichen (30) der zweiten Mehrzahl in Bezug auf den Kanal (19) dicht verschlossen ist.

## Revendications

1. Structure de roue à rayons (1) pour un véhicule, comprenant :
- une jante de roue (10) avec un canal (19) pour loger un pneu,
- un moyeu de roue (40) agencé de façon centrale par rapport à la jante de roue (10) et configuré pour être monté de façon rotative par rapport au véhicule,
- une pluralité de rayons de roue (20) montés et tendus entre le moyeu de roue (40) et la jante de roue (10), chaque rayon de roue (20) de ladite pluralité définissant une extrémité proximale de rayon (21) configurée pour être montée au moyeu (40) et une extrémité distale opposée (22) configurée pour être montée à la jante de roue (10), et chaque rayon (20) de ladite pluralité comprenant une tige de rayon allongée (23) s'étendant le long d'un axe de rayon (R-R) entre l'extrémité de rayon proximale (21) et l'extrémité de rayon distale (22) et une tête de rayon élargie (24) à l'extrémité de rayon distale (22),
- la jante de roue (10) comprenant une pluralité de sièges de réception de rayon (11), chacun des sièges (11) étant configurés pour recevoir et retenir un rayon (20) respectif de la pluralité de rayons à l'extrémité de rayon distale (22), chaque siège de rayon (11) comprenant un trou de passage (12) comportant une première partie de trou (13) configurée pour permettre le passage de la tige (23) du rayon (20) respectif, une deuxième partie de trou (14) ayant un diamètre plus grand que celui de la première partie de trou (13) et configurée pour permettre le passage de la tête de rayon élargie (24), une surface de retenue (15) qui relit la première partie de trou (13) à la deuxième partie de trou (14) et est configurée pour retenir en prise de butée la tête élargie (24) du rayon (20) respectif lorsque le rayon (20) respectif est tendu entre la jante de roue (10) et le moyeu de roue (40),
**caractérisé en ce que** la structure de roue (1) comprend une pluralité d'éléments de sécurité (50), chacun des éléments de sécurité (50) pouvant être engagé dans un siège (11) correspondant de la pluralité de sièges de rayon afin de presser la tête élargie (24) du rayon (20) respectif contre la surface de retenu (15) à l'aide d'un effort de poussée exercé le long de l'axe de rayon (R-R) et orienté de la jante de roue (10) vers le moyeu de roue (40).

2. Structure de roue à rayons (1) selon la revendication 1, **caractérisée en ce que** chacun des éléments de sécurité (50) est configuré pour être inséré dans la deuxième partie de trou (14) jusqu'à buter contre la tête de rayon élargie (24) du côté opposé par rapport à la tige de rayon allongée (23) en interposant la tête de rayon élargie (24) entre la surface de retenu (15) et l'élément de sécurité (50).

3. Structure de roue à rayons (1) selon au moins une revendication précédente, **caractérisée en ce que** l'élément de sécurité (50) de ladite pluralité comprend un patin de friction (55) qui est attaché à l'élément de sécurité (50) et agencé pour être en regard de la tête élargie (24) et à être pressé en contact contre la tête élargie (24) afin d'agir à l'encontre d'une rotation de la tête élargie (24) par rapport à chaque élément de sécurité (50).

4. Structure de roue à rayons (1) selon la revendication 3, **caractérisée en ce que** le patin de friction (55) comprend un matériau élastomère.

5. Structure de roue à rayons (1) selon au moins une revendication précédente, **caractérisée en ce que** chacun des éléments de sécurité (50) de ladite pluralité et chaque deuxième partie de trou (14) correspondante du siège de rayon (11) comprend des moyens de verrouillage (51, 16) amovibles pour verrouiller chaque élément de sécurité (50) de façon amovible dans la deuxième partie de trou (14).

6. Structure de roue à rayons (1) selon la revendication 3, **caractérisée en ce que** les moyens de verrouillage (51, 16) amovibles comprennent un filetage extérieur (51) de l'élément de sécurité et un filetage intérieur complémentaire (16) de la deuxième partie de trou (14), configurés pour rapprocher chaque élément de sécurité (50) de la tête de rayon élargie (24) en vissant l'élément de sécurité (50) dans une direction de rotation de vissage prédéterminée.

7. Structure de roue à rayons (1) selon la revendication 6, **caractérisée en ce que** le rayon (20) respectif de ladite pluralité comprend des moyens pour tendre qui sont adaptés pour tendre le rayon (20) respectif en faisant tourner la tête de rayon élargie (24) dans une direction de rotation de tension prédéterminée, et **en ce que** la direction de rotation de vissage de chaque élément de sécurité (50) est l'inverse par rapport à la direction de rotation de tension du rayon (20) respectif.

8. Structure de roue à rayons (1) selon la revendication 7, **caractérisée en ce que** le rayon (20) respectif est monolithique, la tête élargie (24) et la tige de rayon allongée (23) étant réalisées en une seule pièce, et **en ce que** la tige de rayon allongée (23) comprend une extrémité libre (26) sur un côté opposé de la tête élargie (24), à l'extrémité de rayon proximale (21), comprenant un filetage extérieur qui est complémentaire à un filetage intérieur correspondant dans le moyeu de roue (40).

9. Structure de roue à rayons (1) selon la revendication 7, **caractérisé en ce que** la tête élargie (24) du rayon (20) respectif est séparée de la tige de rayon allongée (23) et couplée à la tige de rayon allongée (23) à l'aide d'un accouplement fileté.

10. Structure de roue à rayons (1) selon la revendication 1 ou 2, **caractérisée en ce que** chaque élément de sécurité (50) de ladite pluralité et chaque deuxième partie de trou (14) du siège de rayon (11) comprennent des moyens de verrouillage non-amovibles, de préférence choisis parmi accouplement par interférence, montage par pression, collage.

11. Structure de roue à rayons (1) selon la revendication 1 ou 2, **caractérisée en ce que** chaque élément de sécurité (50) de ladite pluralité et chaque deuxième partie de trou (14) du siège de rayon (11) comprennent des moyens de verrouillage élastiques, choisis de préférence parmi anneau de type Seeger, goupille fendue.

12. Structure de roue à rayons (1) selon au moins une des revendications précédentes, **caractérisée en ce que** le canal (19) pour loger un pneu est configuré pour former, ensemble avec le pneu, une chambre étanche (61) de type sans chambre à air, et **en ce que** la pluralité de rayons (20) est attachée à la jante de roue (1) à l'extérieur de la chambre étanche.

13. Structure de roue à rayons (1) selon la revendication 12, comprenant en outre une deuxième pluralité de rayons (30) montée et tendue entre le moyeu de roue (40) et la jante de roue (10), chaque rayon de roue (30) de ladite deuxième pluralité définissant une extrémité proximale de rayon (31) configurée pour être montée au moyeu (40) et une extrémité distale opposée (32) configurée pour être fixée à la jante de roue (10), la deuxième pluralité de rayons (30) étant attachée à la jante de roue (10) à l'intérieur de la chambre étanche (61) au canal (19), et la structure de roue (1) étant dépourvue d'éléments de sécurité à chacun des rayons (30) de la deuxième pluralité de rayons et l'extrémité distale (32) des rayons (30) de la deuxième pluralité est hermétiquement fermée par rapport au canal (19).
